# EUROPEAN PATENT SPECIFICATION

(11) **EP 1 298 844 B1**
(45) Date of publication and mention of the grant of the patent: **06.07.2005**
(21) Application number: 01402462.4
(22) Date of filing: 26.09.2001
(51) Int. Cl.: H04L 12/28

(54) **Telecommunication system with distributed broadband remote access servers**
Telekommunicationssystem mit verteilten Breitband-Fernzugriffsservern
Système de télécommunications avec serveurs d'accès à distance à bande large distribués

(43) Date of publication of application: 02.04.2003
(60) Divisional application: 05290347.3
(73) Proprietor: ALCATEL, 75008 Paris (FR)
(72) Inventor: Verbesselt, Ivan Anton, 1840 Londerzeel (BE)
(74) Representative: Narmon, Gisèle Marie Thérèse

(56) References cited:
- WO-A-01/31856
- CRAY A: "GIVING THE EDGE TO AGGREGATION" DATA COMMUNICATIONS, MCGRAW HILL. NEW YORK, US, vol. 27, no. 16, 1 November 1998 (1998-11-01), pages 33-34, XP000785272 ISSN: 0363-6399
- D. MITTON, M. BEADLES: "Network access server requirements next generation (NASREQNG) NAS model" RFC2881, [Online] July 2000 (2000-07), XP002191789 www.ietf.org Retrieved from the Internet: <URL:http://www.ietf.org/rfc/rfc2881.txt?n umber=2881> [retrieved on 2002-02-27]
- NILSSON P ET AL: "ANX-HIGH-SPEED INTERNET ACCESS" ON - ERICSSON REVIEW, ERICSSON. STOCKHOLM, SE, no. SPEC INT ISS, 1998, pages 24-31, XP000751712 ISSN: 0014-0171
- GIESELER S: "TUNNELBAU. REMOTE-ACCESS-SERVER ALS BASIS FUER VIRTUAL PRIVATE NETWORKS" NET - ZEITSCHRIFT FUER KOMMUNIKATIONSMANAGEMENT, HUTHIG VERLAG, HEILDERBERG, DE, vol. 52, no. 8/9, 1998, pages 38-40, XP000782761 ISSN: 0947-4765

## Description

The present invention relates to a telecommunication system comprising an access network to which a plurality of subscribers are coupled, a core network coupled to said access network and to which a plurality of network service providers are coupled, and a broadband remote access server adapted to connect said subscribers to said network service providers via said access network and said core network, said broadband remote access server being further adapted to aggregate connections from subscribers towards said network service providers into a concentrated communication pipes.

Such a telecommunication system is already known in the art. Broadband Remote Access Servers [BRAS] have been introduced in end-to-end service delivery systems to enhance the scaleability of broadband access deployments, e.g. for Digital Subscriber Lines [DSL]. The main services provided by these servers are as follows:
- allow for a flexible service selection by the end user or subscriber towards network service providers;
- increase the scaleability of the system by providing session aggregation into relatively bigger concentrated pipes towards the network service providers;
- be a flexible interface between the access network, generally operating in Asynchronous Transfer Mode [ATM], and data backbones of operators; and
- be a flexible wholesale access point between Network Access Providers [NAP] coupled to the server and Network Service Providers [NSP].

Meanwhile, a number of evolutions are gradually changing the scaleability constraints and hence increasingly stressing the above session aggregation. This is a result of an increasing port density at the NAP's side and of an increasing uptake of required services.

Both constraints are currently driving the service deployment, and thus the broadband remote access server, deeper into the network, i.e. closer to the subscriber. The ultimate case being the integration of the functionality of the broadband remote access server into the access node interconnecting the access network and the subscribers.

As a result of such a deployment, broadband remote access servers are no longer maintained into a confined geographical portion of the access network, which poses a significant scaleability problem. The cost-of-ownership will for instance be increased because of the necessity of operating more complex devices deeper in the network.

Additionally, today's broadband remote access server implementations are addressing considerably more functionality than strictly needed for addressing the initial objective of scaleability through aggregation. Typically, a value-added functionality, such as intelligent caching, firewalling, Authentication-Authorization-Accounting [AAA], associated to the broadband remote access server, is preferably dealt with as high as possible in the network. This is a consequence of the significant amount of control and management it requires. In addition, deploying the value-added functionality at a higher level in the network allows for some interesting economies of scale.

An object of the present invention is to provide a telecommunication system of the above known type but wherein the broadband remote access server is adapted to achieve the required services and value-added functionality while remaining relatively economic and simple to implement.

According to the invention, this object is achieved due to the fact that said broadband remote access server includes:
- a primary tier broadband remote access server interfacing said access network with said core network and adapted to aggregate, in said core network, connections from said subscribers towards network service providers into distinct first communication pipes, and
- a secondary tier broadband remote access server located in said access network closer to said subscribers than said primary tier server and adapted to aggregate connections from subscribers towards said primary tier server into second concentrated communication pipes.

The aggregation function of the secondary tier broadband remote access server, located relatively deep in the network, relieves the connection burden on the access node, which is even exacerbated due to the moving of the primary tier broadband remote access server higher in the network. This further allows the primary tier broadband remote access server to be more scaleable and deployable. Moreover, the primary and secondary tier broadband remote access servers collaborate such as to aggregate sessions in such a way that the same functionality is offered as from a known 'monolithic' broadband remote access server. The invention relies thus on a multi-tier network topology where the different components of the broadband remote access server's functionality can be flexibly shifted in the network and collaborate to achieve dynamic aggregation. This further allows to decrease cost-of-ownership and management complexity since the added value functionality (caching, fire-walling, AAA, ...) of the primary tier broadband remote access server is dealt with as high as possible in the network.

It is to be noted that a telecommunication system wherein subscribers are coupled to network service providers via an access network and a core network is also known from other document. For instance, the document of CRAY A: "GIVING THE EDGE TO AGGREGATION" DATA COMMUNICATIONS, MCGRAW HILL. NEW YORK, US, Vol. 27, no. 16, 1 November 1998 (1998-11-01), pages 33-34, XP000785272 ISSN: 0363-6399, discloses such a telecommunication network. However, in this known document, the telecommunication network uses a Digital Subscriber Line Access Multiplexer [DSLAM] rather than a Broadband Remote Access Server [BRAS]. This known document doesn't also not disclose that functions of the BRAS are split into a Primary Tier Broadband Remote Access Server and a Secondary Tier Broadband Remote Access Server. The same applies to other known telecommunication networks, such as those discloses by D. MITTON and M. BEADLES in "Network access server requirements next generation (NASREQNG) NAS model" RFC2881, [Online] July 2000 (2000-07), XP002191789 www.ietf.org, and by NILSSON et al. in "NX-HIGH-SPEED INTERNET ACCESS" ON-ERICSSON REVIEW, ERICSSON, STOCKHOLM, SE, no. SPEC INT ISS, 1998, pages 24-31, XP000751712 ISSN: 0014-0171.Another characterizing embodiment of the present invention is that said access network is adapted to use label switching [L2] technology between said primary tier server and said secondary tier server.

The label switching technology corresponds for instance to Layer 2 [L2] connections of the OSI model. This technology allows the telecommunication system to operate according to protocols such as Asynchronous Transfer Mode [ATM], Frame Relay [FR], Multi Path Line Switching [MPLS], Tag Switching, ...

Also another characterizing embodiment of the present invention is that said telecommunication system further includes an access multiplexer adapted to interconnect subscribers to said access network, and that said secondary tier server is integrated into said access multiplexer.

In this way, the access multiplexer, which preferably is a digital subscriber line access multiplexer [DSLAM], becomes an access node upgraded to provide the above-mentioned services and value-added functionality.

The present invention also relates to a method to establish and to aggregate telecommunication connections between subscribers coupled to an access network and network service providers coupled to a core network, said core network being coupled to said access network, and said method consisting in establishing said connections via a broadband remote access server adapted to aggregate connections from said subscribers towards said network service providers into concentrated communication pipes.

Such a telecommunication system is already known in the art as mentioned above, and the connection method used therein consists in providing session aggregations into concentrated pipes between the broadband remote access server and the network service providers.

A second object of the present invention is to provide an improved method for transmitting data through the telecommunication system via the broadband remote access server.

According to the invention, this second object is achieved due to the fact that said method comprises the steps of:
- sending all upstream traffic of said subscribers towards a primary tier broadband remote access server, the sending operation being performed by a secondary tier broadband remote access server forming part, together with said primary tier server, of said broadband remote access server;
- classifying of the incoming flows of said upstream traffic into session aggregations on basis of a local algorithm, the classifying operation of upstream traffic being performed by said primary tier server that interfaces said access network and said core network;
- aggregating predetermined incoming flows into first communication pipes in said core network towards network service providers and according to said session aggregations, the aggregating operation being performed by said primary tier server; and
- signaling to said secondary tier server to aggregate predetermined incoming flows into second communication pipes in said access network according to said session aggregations, the signaling operation being performed by said primary tier server.

In this way, the flows are arranged in session aggregations from the subscriber to the network service provider via the two cooperating tier servers.

Another characterizing embodiment of the present method is that a label switching [L2] technology is used between said secondary tier server and said primary tier server through said access network, that said secondary tier server sends said upstream traffic towards said primary tier server onto a default label, and that said primary tier server relies on the signaling plane of said label switching technology to signal to said secondary tier server to forward predetermined incoming flows onto newly established or pre-provisioned label connections associated to said session aggregations.

Certain flows can thus be shifted to dedicated label connections according to different criteria's.

Also another characterizing embodiment of the present method is that said method further comprises the steps of classifying downstream traffic from said primary tier server towards said subscribers into session aggregations on basis of a second local algorithm, the classifying operation of downstream traffic being performed by said secondary tier server.

The resulting redirections action for the downstream traffic need not be identical to the redirection action performed on the upstream traffic.

Further characterizing embodiments of the present telecommunication system with distributed broadband remote access servers are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

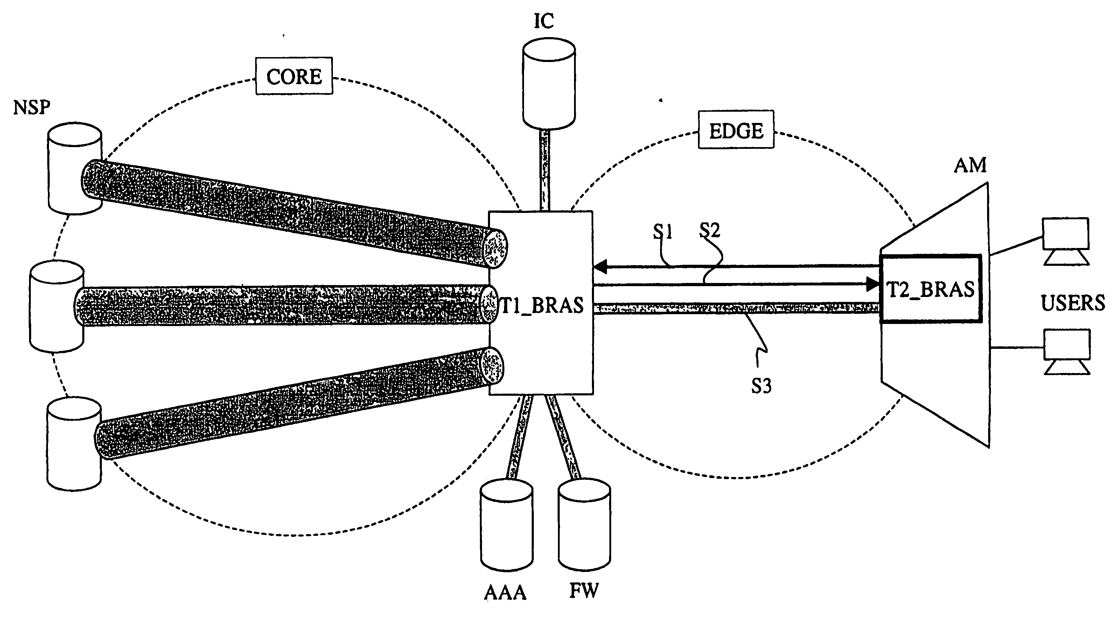

The above and other objects and features of the invention will become more apparent and the invention itself will be best understood by referring to the following description of an embodiment taken in conjunction with the accompanying drawings wherein the figure represents a telecommunication system with distributed broadband remote access servers T1_BRAS and T2_BRAS according to the invention.

The telecommunication system shown at the figure comprises an access network EDGE interconnected to a core network CORE via a primary tier broadband remote access server T1_BRAS. A plurality of subscribers USERS are coupled to the access network via an access multiplexer AM which is for instance a digital subscriber line access multiplexer [DSLAM]. This access multiplexer AM is associated to or embeds the functions of a secondary tier broadband remote access server T2_BRAS. The access multiplexer AM can thus be seem as being an access aggregation node. In other words, the secondary tier broadband remote access server T2_BRAS can be seen as integrated into the access multiplexer AM. A plurality of network service providers NSP are coupled to the core network, and the broadband remote access servers T1_BRAS and T2_BRAS are adapted to connect the subscribers USERS to these network service providers.

In the core network CORE, the primary tier broadband remote access server T1_BRAS is adapted to aggregate connections from the subscribers towards the network service providers NPS into concentrated communication pipes whilst, in the access network EDGE, the secondary tier broadband remote access server T2_BRAS, located closer to the subscribers USER, is adapted to aggregate connections from these subscribers towards the primary tier server T1_BRAS into second concentrated communication pipes. The upstream connections from the subscribers USER, i.e. originated from a Customer Premises Equipment [CPE], aggregated by the secondary tier server T2_BRAS into the second communication pipes through the access network EDGE, are aggregated by the primary tier server T1_BRAS into bigger concentrated pipes towards the providers NPS through the core network CORE. The primary and secondary tier servers collaborate such as to aggregate sessions in such a way that the same functionality is offered as from a 'monolithic' broadband remote access server (BRAS).

The telecommunication system relies on a multi-tier network topology where different components of the value-added BRAS functionality, such as intelligent caching IC, firewalling FW, Authentication-Authorization-Accounting AAA, can be flexibly shifted in the network and collaborate in order to achieve dynamic aggregation.

It is further assumed that a [L2] label switching technology, e.g. Asynchronous Transfer Mode [ATM], Frame Relay [FR], Multi Path Line Switching [MPLS] or Tag Switching, is available between the tier servers T1_BRAS and T2_BRAS.

The operation of the primary tier T1_BRAS and secondary tier T2_BRAS broadband remote access servers is as follows.

All upstream traffic from a subscriber USER, i.e. a user session, is by default sent towards the primary tier server T1_BRAS onto a default label "Ld" by the secondary tier server T2_BRAS. This transmission is indicated by S1 on the figure.

The primary tier server T1_BRAS classifies the incoming flows carried on basis of a local algorithm. Such a local algorithm is for instance the successful completion of a "PPP" session establishment either through local AAA or through proxy AAA, or of a "PPP" session establishment through "L2TP" tunneling, or through other in-band or out-of-band session establishment or service selection mechanisms.

The primary tier server T1_BRAS then relies on the control plane of the label switching technology between T1_BRAS and T2_BRAS, as indicated by S2, to signal to the secondary tier server T2_BRAS that it has to forward some selected flows onto newly established or pre-provisioned label connections, indicated by S3 on the figure.

It is to be noted that the mechanisms for establishing the [L2] label switched connection are dependent on the [L2] label switching technology used and are beyond the scope of this invention.

In the above method, the criteria to shift certain flows to dedicated label connections can be manifold. Some examples are given below:
- all traffic to be forwarded from the primary tier server T1_BRAS to a predetermined network service provider NSP;
- all traffic to be forwarded to a predetermined network service provider NSP with a given traffic/QoS (Quality-of-Service) profile or a given service specification;
- all traffic entitled to certain packages of value-add processing, e.g. intelligent caching IC, fire-walling FW or Authentication-Authorization-Accounting AAA; and/or
- all traffic with predetermined service attributes, e.g. voice or data.

Once a user session is added to such a dedicated or aggregated label connection, the primary tier server T1_BRAS has the ability to flexibly invoke its value-add functionality, e.g. caching, fire-walling, ..., for the different aggregated flows. In fact, the aggregated flows can be cut-through to dedicated companion servers in the primary tier server T1_BRAS realm without relying on the store-and-forward engines of the primary tier server T1_BRAS.

As an example, user sessions aggregated into flows that are not entitled to value-add post-processing can immediately be cut-through to a network service provider NSP, e.g. a Virtual Private Network [VPN] service provider, without posing an additional burden onto the store-and-forward engines of the primary tier server T1_BRAS.

Optionally, the secondary tier server T2_BRAS can autonomously perform the same redirection action for the downstream traffic. This aggregation need not be identical.

While the components of the broadband remote access servers T1_BRAS and T2_BRAS can rely on the control plane offered by the [L2] label switching platform to signal the desired aggregation, some extensions have be made to the latter in order to truly accommodate the Broadband Remote Access Servers or BRAS functional segregation. One such an example is aggregation security. Indeed, once user sessions have been associated to 'aggregated flows', e.g. as per AAA mechanisms as referred to above, security issues might arise since users could perform address spoofing within the same aggregated flow. This can for instance be achieved by picking another [L3] address out of the VPN field associated to the network service provider NSP and by performing a Denial of Service [DOS] attack on the spoofed address. The latter is typically prohibited in monolithic broadband remote access servers that always check the association between the [L3] address and the [L2] user label prior to forwarding on a per packet basis. In order for a segregated BRAS model, according to the present invention, to exhibit the same level of security, this behavior will have to be addressed at the aggregation point, i.e. by the secondary tier server T2_BRAS. The solution is to have the primary tier server T1_BRAS imposing an 'aggregation specification' onto the secondary tier server T2_BRAS thus enforcing the same aggregation rules to be applied on a per packet basis, irrespective of where the aggregation function actually takes place. This has the advantage of having the same level of control and ease of management as with the monolithic broadband remote access servers, without being forced to manage the secondary tier servers T2_BRAS very extensively, if at all.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A telecommunication system comprising an access network (EDGE) to which a plurality of subscribers (USERS) are coupled, a core network (CORE) coupled to said access network and to which a plurality of network service providers (NSP) are coupled, and a broadband remote access server (T1_BRAS; T2_BRAS) adapted to connect said subscribers to said network service providers via said access network and said core network,
said broadband remote access server being further adapted to aggregate connections from subscribers towards said network service providers into concentrated communication pipes,
***characterized in that*** said broadband remote access server includes a primary tier broadband remote access server (T1_BRAS) interfacing said access network (EDGE) with said core network (CORE) and a secondary tier broadband remote access server (T2_BRAS) located in said access network closer to said subscribers than said primary tier broadband remote access server,
said primary tier broadband remote access server including added value functionality
to classify incoming flows of upstream traffic from said subscribers (USERS) towards network service providers (NSP) into session aggregations on basis of a local algorithm,
to aggregate predetermined incoming flows into first communication pipes in said core network towards network service providers (NSP) and according to said session aggregations, and
to signal (S2) to said secondary tier broadband remote access server to aggregate predetermined incoming flows into second communication pipes in said access network according to said session aggregations.

2. The telecommunication system according to claim 1, ***characterized in that*** said access network (EDGE) is adapted to use label switching [L2] technology between said primary tier broadband remote access server (T1_BRAS) and said secondary tier broadband remote access server (T2_BRAS).

3. The telecommunication system according to claim 1,
***characterized in that*** said telecommunication system further includes an access multiplexer (AM) adapted to interconnect subscribers (USERS) to said access network (EDGE),
***and in that*** said secondary tier broadband remote access server (T2_BRAS) is integrated into said access multiplexer.

4. The telecommunication system according to claim 3, ***characterized in that*** functions of said secondary tier broadband remote access server (T2_BRAS) are embedded into said access multiplexer (AM) which is an access aggregation node.

5. The telecommunication system according to claim 3, ***characterized in that*** said access multiplexer (AM) is a digital subscriber line access multiplexer.

6. A method to establish and to aggregate telecommunication connections between subscribers (USERS) coupled to an access network (EDGE) and network service providers (NSP) coupled to a core network (CORE), said core network being coupled to said access network, and said method consisting in establishing said connections via a broadband remote access server (T1_BRAS, T2_BRAS) adapted to aggregate connections from said subscribers towards said network service providers into concentrated communication pipes,
***characterized in that*** said method comprises the steps of:
- sending (S1) all upstream traffic of said subscribers (USERS) towards a primary tier broadband remote access server (T1_BRAS) including added value functionality, the sending operation being performed by a secondary tier broadband remote access server (T2_BRAS) forming part, together with said primary tier broadband remote access server, of said broadband remote access server (T1_BRAS, T2_BRAS);
- classifying the incoming flows of said upstream traffic into session aggregations on basis of a local algorithm, the classifying operation of upstream traffic being performed by said primary tier broadband remote access server that interfaces said access network (EDGE) and said core network (CORE);
- aggregating predetermined incoming flows into first communication pipes in said core network towards network service providers (NSP) and according to said session aggregations, the aggregating operation being performed by said primary tier broadband remote access server; and
- signaling (S2) to said secondary tier broadband remote access server to aggregate predetermined incoming flows into second communication pipes in said access network according to said session aggregations, the signaling operation being performed by said primary tier broadband remote access server.

7. The method according to claim 6, ***characterized***
***in that*** a label switching [L2] technology is used between said secondary tier broadband remote access server (T2_BRAS) and said primary tier broadband remote access server (T1_BRAS) through said access network (EDGE),
***in that*** said secondary tier broadband remote access server sends said upstream traffic towards said primary tier broadband remote access server onto a default label,
***and in that*** said primary tier broadband remote access server relies on the signaling plane of said label switching technology to signal to said secondary tier broadband remote access server to forward predetermined incoming flows onto newly established or pre-provisioned label connections associated to said session aggregations.

8. The method according to claim 6, ***characterized in that*** said method further comprises the steps of classifying downstream traffic from said primary tier broadband remote access server towards said subscribers into session aggregations on basis of a second local algorithm, the classifying operation of downstream traffic being performed by said secondary tier broadband remote access server (T2_BRAS).

9. The method according to claim 7, ***characterized in that*** said primary tier broadband remote access server (T1_BRAS) imposes an aggregation specification onto said secondary tier broadband remote access server (T2_BRAS), said aggregation specification specifying local rules to be applied by said secondary tier broadband remote access server to instances of said session aggregations.

10. The method according to claim 7, ***characterized in that*** said session aggregations correspond to dedicated label connections.

## Patentansprüche

1. Ein Telekommunikationssystem, das ein Zugangsnetz (EDGE) umfasst, an das mehrere Teilnehmeranschlüsse (USERS) gekoppelt sind, ein Kernnetz (CORE), das mit dem genannten Zugangsnetz verbunden ist und an das mehrere Online-Dienste (NSP) gekoppelt sind, sowie einen Remote-Breitbandzugangs-Server (T1_BRAS; T2_BRAS), der so auslegt ist, dass die genannten Teilnehmeranschlüsse über das genannte Zugangsnetz und das genannte Kernnetz mit den genannten Online-Diensten verbunden werden können,
wobei der genannte Remote-Breitbandzugangs-Server darüber hinaus zur Bündelung der zu den genannten Online-Diensten führenden Teilnehmeranschlüsse in konzentrierten Übertragungs-Pipelines ausgelegt ist,
***dadurch gekennzeichnet, dass*** der genannte Remote-Breitbandzugangs-Server einen primärstufigen Remote-Breitbandzugangs-Server (T1_BRAS) einschließt, der die Schnittstelle zwischen dem genannten Zugangsnetz (EDGE) und dem genannten Kernnetz (CORE) bildet, sowie einen sekundärstufigen Remote-Breitbandzugangs-Server (T2_BRAS), der sich in dem genannten Zugangsnetz näher an den genannten Teilnehmeranschlüssen befindet als der genannte primärstufige Remote-Breitbandzugangs-Server,
wobei der genannte primärstufige Remote-Breitbandzugangs-Server auch Mehrwertfunktionen ausführt;
um die im Upstream-Datenverkehr eingehenden und an die Online-Dienste (NSP) gerichteten Datenflüsse der genannten Teilnehmeranschlüsse (USERS) auf der Basis eines lokalen Algorithmus in Verbindungsbündel zu gruppieren,
um vorgegebene eingehende Datenflüsse in dem genannten Kernnetz entsprechend der genannten Verbindungsbündelung in erste Übertragungs-Pipelines zu den genannten Online-Diensten zu bündeln, und
um dem genannten sekundärstufigen Remote-Breitbandzugangs-Server zu melden (S2), dass vorgegebene eingehende Datenflüsse in dem genannten Zugangsnetz und entsprechend der genannten Verbindungsbündelung in zweite Übertragungs-Pipelmes zu bündeln sind.

2. Telekommunikationssystem gemäß Anspruch 1,
***dadurch gekennzeichnet,* dass** das genannte Zugangsnetz (EDGE) für den Einsatz einer Label Switching-Technologie [L2] zwischen dem genannten primärstufigen Remote-Breitbandzugangs-Server (T1_BRAS) und dem genannten sekundärstufigen Remote-Breitbandzugangs-Server (T2_BRAS) ausgelegt ist.

3. Telekommunikationssystem gemäß Anspruch 1,
***dadurch gekennzeichnet, dass*** das genannte Telekommunikationssystem außerdem einen Zugangs-Multiplexer (AM) einschließt, der dazu ausgelegt ist, die Teilnehmeranschlüsse (USERS) mit dem genannten Zugangsnetz (EDGE) zu verbinden,
***und dadurch, dass*** der genannte sekundärstufige Remote-Breitbandzugangs-Server (T2_BRAS) in den genannten Zugangs-Multiplexer integriert ist.

4. Telekommunikationssystem gemäß Anspruch 3,
***dadurch gekennzeichnet, dass*** Funktionen des genannten sekundärstufigen Remote-Breitbandzugangs-Servers (T2_BRAS) in den genannten Zugangs-Multiplexer (AM) integriert sind, der als Zugangs-Bündelungsknoten ausgelegt ist.

5. Telekommunikationssystem gemäß Anspruch 3,
***dadurch gekennzeichnet, dass*** der genannte Zugangs-Multiplexer (AM) eine digitale Access-Multiplexer-Einrichtung ist.

6. Eine Methode zur Herstellung und zur Bündelung von Telekommunikationsverbindungen zwischen den Teilnehmeranschlüssen (USERS), die an ein Zugangsnetz (EDGE) gekoppelt sind, und den Online-Diensten (NSP), die an ein Kernnetz (CORE) gekoppelt sind, wobei das genannte Zugangsnetz an das genannte Kernnetz gekoppelt ist, und die genannte Methode darin besteht, die genannten Verbindungen über einen Remote-Breitbandzugangs-Server (T1_BRAS, T2_BRAS) herzustellen, der die Verbindungen zwischen den genannten Teilnehmeranschlüssen und den genannten Online-Diensten in konzentrierte Übertragungs-Pipelines bündelt,
***dadurch gekennzeichnet, dass*** die genannte Methode die folgenden Schritte umfasst:
- der gesamte Upstream-Datenverkehr der genannten Teilnehmeranschlüsse (USERS) wird an einen primärstufigen Remote-Breitbandzugangs-Server (T1_BRAS) mit Mehrwertfunktionen übertragen (S1), wobei der Übertragungsvorgang von einem sekundärstufigen Remote-Breitbandzugangs-Server (T2_BRAS) ausgeführt wird, der ebenso wie der genannte pnmärstufige Remote-Breitbandzugangs-Server Bestandteil des genannten Remote-Breitbandzugangs-Servers (T1_BRAS, T2_BRAS) ist;
- die im genannten Upstream-Datenverkehr eingehenden Datenflüsse werden auf der Basis eines lokalen Algorithmus in Verbindungsbündel gruppiert, wobei der Gruppierungsvorgang des Upstream-Datenverkehrs von dem genannten primärstufigen Remote-Breitbandzugangs-Server ausgeführt wird, der jeweils eine Schnittstelle zu dem genannten Zugangsnetz (EDGE) und zu dem genannten Kernnetz (CORE) aufweist;
- vorgegebene eingehende Datenflüsse werden in dem genannten Kernnetz und entsprechend der genannten Verbindungsbündelung in erste Übertragungs-Pipelines zu den Online-Diensten (NSP) gebündelt, wobei der Bündelungsvorgang von dem genannten primärstufigen Remote-Breitbandzugangs-Server ausgeführt wird; und
- an den genannten sekundärstufigen Remote-Breitbandzugangs-Server wird ein Signal (S2) gesandt, vorgegebene eingehende Datenflüsse in dem genannten Zugangsnetz und entsprechend der genannten Verbindungsbündelung in zweite Übertragungs-Pipelines zu bündeln, wobei die Signalisierung von dem genannten primärstufigen Remote-Breitbandzugangs-Server ausgeführt wird.

7. Methode gemäß Anspruch 6,
***dadurch gekennzeichnet, dass*** zwischen dem genannten sekundärstufigen Remote-Breitbandzugangs-Server (T2_BRAS) und dem genannten primärstufigen Remote-Breitbandzugangs-Server (T1_BRAS) in dem genannten Zugangsnetz (EDGE) eine Label Switching-Technologie [L2] genutzt wird,
***dass*** der genannte sekundärstufige Remote-Breitbandzugangs-Server den genannten Upstream-Datenverkehr an ein Standard-Label zu dem genannten primärstufigen Remote-Breitbandzugangs-Server überträgt,
***und dass*** der genannte primärstufige Remote-Breitbandzugangs-Server die Signalebene der genannten Label Switching-Technologie nutzt, um dem genannten sekundärstufigen Remote-Breitbandzugangs-Server zu melden, dass vorgegebene eingehende Datenflüsse an neu erstellte oder vorab bereitgestellte Label-Verbindungen weiterzuleiten sind, die mit den genannten Verbindungsbündeln verknüpft sind.

8. Methode gemäß Anspruch 6, ***dadurch gekennzeichnet, dass*** die genannte Methode zudem die Schritte zur Bündelgruppierung des Downstream-Datenverkehrs von dem genannten primärstufigen Remote-Breitbandzugangs-Server zu den genannten Teilnehmeranschlüssen auf der Basis eines zweiten lokalen Algorithmus umfasst, wobei der Gruppierungsvorgang des Downstream-Datenverkehrs von dem genannten sekundärstufigen Remote-Breitbandzugangs-Server (T2_BRAS) ausgeführt wird.

9. Methode gemäß Anspruch 7, ***dadurch gekennzeichnet, dass*** der genannte primärstufige Remote-Breitbandzugangs-Server (T1_BRAS) einen Befehl der Bündelungsspezifikation an den genannten sekundärstufigen Remote-Breitbandzugangs-Server (T2_BRAS) überträgt, wobei die genannte Bündelungsspezifikation lokale Regeln enthält, die von dem genannten sekundärstufigen Remote-Breitbandzugangs-Server auf die verschiedenen Fälle der genannten Verbindungsbündelung anzuwenden sind.

10. Methode gemäß Anspruch 7, ***dadurch gekennzeichnet, dass*** die genannten Verbindungsbündel auf reservierte Label-Verbindungen abgestimmt sind.

## Revendications

1. Système de télécommunication comprenant un réseau d'accès (EDGE) auquel une pluralité d'abonnés (USERS) sont couplés, un réseau de noyau (CORE) couplé audit réseau d'accès et auquel une pluralité de fournisseurs de services de réseau (NSP) sont couplés, et un serveur d'accès à distance large bande (T1_BRAS ; T2_BRAS) adapté pour connecter lesdits abonnés auxdits fournisseurs de services de réseau par l'intermédiaire dudit réseau d'accès et dudit réseau de noyau,
ledit serveur d'accès à distance large bande étant, en outre, adapté pour rassembler des connexions d'abonnés vers lesdits fournisseurs de services de réseau dans des tubes de communication concentrés,
**caractérisé en ce que** ledit serveur d'accès à distance large bande comprend un serveur d'accès à distance large bande de niveau primaire (T1_BRAS) interfaçant ledit réseau d'accès (EDGE) avec ledit réseau de noyau (CORE) et un serveur d'accès à distance large bande de niveau secondaire (T2_BRAS) situé dans ledit réseau d'accès plus près desdits abonnés que ledit serveur d'accès à distance large bande de niveau primaire,
ledit serveur d'accès à distance large bande de niveau primaire comprenant une fonctionnalité à valeur ajoutée
pour classifier des flux entrants de trafic amont desdits abonnés (USERS) vers des fournisseurs de services de réseau (NSP) en rassemblements de sessions sur la base d'un algorithme local,
pour rassembler des flux entrants prédéterminés dans des premiers tubes de communication dans ledit réseau de noyau vers des fournisseurs de services de réseau (NSP) et conformément auxdits rassemblements de sessions, et
pour signaler (S2) audit serveur d'accès à distance large bande de niveau secondaire de rassembler des flux entrants prédéterminés dans des deuxièmes tubes de communication dans ledit réseau d'accès conformément auxdits rassemblements de sessions.

2. Système de télécommunication selon la revendication 1,
**caractérisé en ce que** ledit réseau d'accès (EDGE) est adapté pour utiliser une technologie de commutation à étiquettes (L2) entre ledit serveur d'accès à distance large bande de niveau primaire (T1_BRAS) et ledit serveur d'accès à distance large bande de niveau secondaire (T2_BRAS).

3. Système de télécommunication selon la revendication 1,
**caractérisé en ce que** ledit système de télécommunication comprend, en outre, un multiplexeur d'accès (AM) adapté pour interconnecter des abonnés (USERS) et ledit réseau d'accès (EDGE),
et **en ce que** ledit serveur d'accès à distance large bande de niveau secondaire (T2_BRAS) est intégré dans ledit multiplexeur d'accès.

4. Système de télécommunication selon la revendication 3,
**caractérisé en ce que** des fonctions dudit serveur d'accès à distance large bande de niveau secondaire (T2_BRAS) sont intégrées dans ledit multiplexeur d'accès (AM) qui est un noeud de rassemblement d'accès.

5. Système de télécommunication selon la revendication 3,
**caractérisé en ce que** ledit multiplexeur d'accès (AM) est un multiplexeur d'accès de lignes d'abonnés numériques.

6. Procédé pour établir et pour rassembler des connexions de télécommunication entre des abonnés (USERS) couplés à un réseau d'accès (EDGE) et des fournisseurs de services de réseau (NSP) couplés à un réseau de noyau (CORE), ledit réseau de noyau étant couplé audit réseau d'accès, et ledit procédé consistant en l'établissement desdites connexions par l'intermédiaire d'un serveur d'accès à distance large bande (T1_BRAS ; T2_BRAS) adapté pour rassembler des connexions desdits abonnés vers lesdits fournisseurs de services de réseau dans des tubes de communication concentrés,
**caractérisé en ce que** ledit procédé comprend les étapes consistant à :
- envoyer (S1) tout le trafic amont desdits abonnés (USERS) vers un serveur d'accès à distance large bande de niveau primaire (T1_BRAS) comprenant une fonctionnalité à valeur ajoutée, l'opération d'envoi étant effectuée par un serveur d'accès à distance large bande de niveau secondaire (T2_BRAS) faisant partie, avec ledit serveur d'accès à distance large bande de niveau primaire, dudit serveur d'accès à distance large bande (T1_BRAS ; T2_BRAS) ;
- classifier les flux entrants dudit trafic amont en rassemblements de sessions sur la base d'un algorithme local, l'opération de classification du trafic amont étant effectuée par ledit serveur d'accès à distance large bande de niveau primaire qui interface ledit réseau d'accès (EDGE) et ledit réseau de noyau (CORE) ;
- rassembler des flux entrants prédéterminés dans des premiers tubes de communication dans ledit réseau de noyau vers des fournisseurs de services de réseau (NSP) et conformément auxdits rassemblements de sessions, l'opération de rassemblement étant effectuée par ledit serveur d'accès à distance large bande de niveau primaire ; et
- signaler (S2) audit serveur d'accès à distance large bande de niveau secondaire de rassembler des flux entrants prédéterminés dans des deuxièmes tubes de communication dans ledit réseau d'accès conformément auxdits rassemblements de sessions, l'opération de signalisation étant effectuée par ledit serveur d'accès à distance large bande de niveau primaire.

7. Procédé selon la revendication 6,
**caractérisé en ce qu'**une technologie de commutation à étiquettes (L2) est utilisée entre ledit serveur d'accès à distance large bande de niveau secondaire (T2_BRAS) et ledit serveur d'accès à distance large bande de niveau primaire (T1_BRAS) par l'intermédiaire dudit réseau d'accès (EDGE),
**en ce que** ledit serveur d'accès à distance large bande de niveau secondaire envoie ledit trafic amont vers ledit serveur d'accès à distance large bande de niveau primaire sur une étiquette par défaut,
et **en ce que** ledit serveur d'accès à distance large bande de niveau primaire s'appuie sur le plan de signalisation de ladite technologie de commutation à étiquettes pour signaler audit serveur d'accès à distance large bande de niveau secondaire d'acheminer des flux entrants prédéterminés sur des connexions à étiquettes nouvellement établies ou fournies au préalable associées auxdits rassemblements de sessions.

8. Procédé selon la revendication 6,
**caractérisé en ce que** ledit procédé comprend, en outre, les étapes consistant à classifier un trafic, aval dudit serveur d'accès à distance large bande de niveau primaire vers lesdits abonnés en des rassemblements de sessions sur la base d'un deuxième algorithme local, l'opération de classification du trafic aval étant effectuée par ledit serveur d'accès à distance large bande de niveau secondaire (T2_BRAS).

9. Procédé selon la revendication 7,
**caractérisé en ce que** ledit serveur d'accès à distance large bande de niveau primaire (T1_BRAS) impose une spécification de rassemblement audit serveur d'accès à distance large bande de niveau secondaire (T2_BRAS), ladite spécification de rassemblement spécifiant des règles locales devant être appliquées par ledit serveur d'accès à distance large bande de niveau secondaire à des instances desdits rassemblements de sessions.

10. Procédé selon la revendication 7,
**caractérisé en ce que** lesdits rassemblements de sessions correspondent à des connexions à étiquettes dédiées.
